# EUROPEAN PATENT APPLICATION

(11) **EP 1 690 456 A1**
(43) Date of publication of application: **16.08.2006**
(21) Application number: 06101585.5
(22) Date of filing: 13.02.2006
(51) Int. Cl.: A23C 9/123, A23L 1/187

(54) **Stabilised dairy base material for use as heavy cream replacement**

(30) Priority: 15.02.2005 US 57993
(71) Applicant: KRAFT FOODS HOLDINGS, INC., Northfield, Illinois 60093 (US)
(72) Inventor: TRECKER, Gary W., McHenry, IL 60051 (US); MONCKTON, Susan P., Carol Stream, IL 60188 (US); ABBOUD, Amna M., Germantown, TN 38138 (US); ZHENG, Zuoxing, Palatine, IL 60074 (US); ROMAN, Michael G., Grayslake, IL 60030 (US)
(74) Representative: Smaggasgale, Gillian Helen

(57) **Abstract**

The present invention is directed to a stabilized dairy base material for use as a heavy cream replacement or substitute as well as methods for producing the stabilized dairy base material. The stabilized dairy base material contains a nisin-containing curd material prepared by fermentation of milk and/or cream with a nisin-producing culture.

## Description

### FIELD OF THE INVENTION

The present invention is directed to a stabilized dairy base material for use as a heavy cream replacement in food products, especially in savory sauces and desserts, as well as a method for producing the stabilized dairy base material. The stabilized dairy base material contains a nisin-containing curd material prepared by fermentation of milk and/or cream with a nisin-producing culture.

### BACKGROUND OF THE INVENTION

Food products prepared with heavy cream, such as conventional savory sauce and dessert-type dairy products, are often susceptible to microbial contamination. Such contamination may have adverse effects on the shelf life and stability of such food products. Pathogenic organisms that may contaminate food products include, by way of nonlimiting example, *Clostridium botulinum, C. perfringens,* (Lucke et al., in "Ecology and Control Foods" (A.H.W. Hauschild and K.L Dodds, eds.) Marcel Dekker, New York, 1993, pp. 177-207; Smart et al., J. Appl. Bacteriol., 46, 377-383 (1979); Roberts et al., J. Food Technol., 14, 211-226 (1979); Tompkin, Food Technology, 34, 229-236, and 257 (1980); Bryan et al., Amer. Public Health, 61, 1869-1885 (1971); Microbial Ecology of Food Commodities-Microorganisms in Foods 6: Blackie Academic and Professional, 1998, p. 115), *Listeria monocytogenes, Escherichia coli, Bacillus cereus, Staphylococcus aureus, Enterococcus faecalis,* and similar microorganisms. Spore-forming and toxin-producing microorganisms (e.g., species of the genus *Clostridium)* are of particular concern, because spores produced by viable cells may survive and grow to produce toxins subsequent to manufacturing or domestic heating steps.

As a result, conventionally made desserts and savory sauces containing heavy cream may result in economic losses, as such products have a reduced shelf life and often must be disposed of before they are eaten or purchased by consumers. While various attempts have been made to prevent or reduce this microbial contamination, these attempts to produce a dessert or savory sauce product which has characteristics, such as flavor, texture, and functionality similar to that of conventionally made savory sauce and dessert-type dairy products, have not been as successful as desired.

A number of methods have been used to stabilize dairy products in the past. In some of these studies, a nisin producing culture was used to prepare such products. Kalra et al. (Indian Journal of Dairy Science, 28: 71-72 (1975)) incorporated the nisin producing culture *Streptococcus lactis* (now known as *L. lactis* subsp. *lactis)* along with the yogurt culture before fermentation. Others introduced nisin in milk prior to fermentation (Bayoumi, Chem. Mikrobiol. Technol. Lebensm., 13:65-69 (1991)) or following fermentation (Gupta et al., Cultured Dairy Products Journal, 23: 17-18 (1988); Gupta et al., Cultured Dairy Products Journal, 23: 9-10 (1989)).

In U.S. Patent 5,527,505 by Yamauchi et al., yogurt was produced from raw milk by incorporating a nisin-producing strain, *Lactococcus lactis* subsp. *lactis,* along with the traditional yogurt culture consisting of *Streptococcus salivarius* subsp. *thermophilus* (ST) and *Lactobacillus delbrueckii* subsp. *bulgaricus* (LB). Yamauchi et al. teach that the lactococci are needed to secrete the nisin, whose effect is to retard the activity of ST and LB. The resulting yogurt therefore contains the lactococci used to produce the nisin. Nonetheless, the acidity of yogurt containing the nisin-producing bacteria increased by about 64 to about 96 percent in 14 days, in various experiments inoculated with differing amounts of *L. lactis* subsp. *lactis,* compared to the initial acidity at the completion of fermentation. Other studies (Hogarty et al., J. Food Prot., 45:1208-1211 (1982); Sadovski et al., XX International Dairy Congress, Vol. E: 542-5-44 (1978)) also noted acid production and development of bitterness at low temperature by some mesophilic starter lactococci in dairy products.

In U.S. Patent 5,015,487 to Collison et al., the use of nisin, as a representative of the class of lanthionine bacteriocins, to control undesirable microorganisms in heat processed meats is disclosed. In tests involving dipping frankfurters in nisin solutions, the growth of *L. monocytogenes* was effectively inhibited upon storage at 4°C.

Chung et al. (Appl. Envir. Microbiol., 55, 1329-1333 (1989)) report that nisin has an inhibitory effect on Gram-positive bacteria, such as *L*. *monocytogenes, Staphylococcus aureus,* and *Streptococcus lactis,* but has no such effect on Gram-negative bacteria such as *Serratia marcescens, Salmonella typhimurium,* and *Pseudomonas aeruginosa* when these microorganisms are attached to meat.

Nisin has been added to cheeses to inhibit toxin production by *Clostridium botulinum* (U.S. Patent 4,584,199 to Taylor). U.S. Patent 4,597,972 to Taylor discloses a detailed example in which chicken frankfurter components are shown to require the presence of both added nitrite and added nisin in order to prevent or delay botulinum toxin production when challenged *with C. botulinum.*

Nisaplin® has been found to preserve salad dressings from microbiological contamination, such as challenge by *Lactobacillus brevis* subsp. *lindneri,* for an extended shelf life period (Muriana et al., J. Food Protection, 58:1109-1113 (1995)).

Nisin is a natural antimicrobial agent used primarily as a preservative in heat processed and low pH foods. It is a peptide-like antibacterial substance produced by certain strains of the dairy starter organism *Lactococcus lactis* subsp. *lactis.* Nisin is a small polypeptide of 34 amino acids, which include the atypical residues lanthionine, β-methyl-lanthionine, dehydroalanine, and dehydrobutyrine. The first two mentioned residues close the single sulfur rings that are characteristic of nisin and other structurally related bacteriocins. Variants of nisin are known, including, for example, Nisin A and Nisin Z. Nisin's structure is illustrated in U.S. Patent 5,527,505 to Yamauchi et al. Nisin may be used to inhibit the growth of spoilage and pathogenic microorganisms, such as *Clostridium botulinum* spores (which cause botulism), *Listeria, Enterococcus, Bacillus sporothermodurans,* and *Clostridium.*

Generally it is difficult to synthesize nisin artificially. Thus, nisin-producing bacteria are generally used to synthesize nisin. The highest activity preparations contain about 40 million lU per gram. A commercial preparation, NISAPLIN®, containing about 1 million lU per gram is available from Danisco, Copenhagen, Denmark. NISAPLIN® brand nisin is manufactured by fermenting milk bacteria. The resulting nisin is concentrated, separated, and spray-dried before milling the nisin into fine particles. Nisin-producing cultures also can be used, including applicable strains of lactic acid bacteria. Nisin generally has a molecular weight of about 3,500, but may also exist as dimers or tetramers having molecular weights of about 7,000 and 14,000, respectively. Nisin has no known toxic effects in humans, and is widely used in a variety of prepared dairy products.

However, while the stabilization of other dairy products has been previously achieved, the various attempts to prevent or reduce the microbial contamination of desert or savory sauce products have failed to produce a dessert or savory sauce product which has characteristics, such as flavor and texture, and functionality similar to that of conventionally made savory sauce and dessert-type dairy products. This has been primarily due to the presence of high-fat dairy products, such as heavy cream and the like, in the desserts and savory sauces, which previously have made it difficult to create a stable product while maintaining the characteristics provided by these high-fat dairy products. The present invention provides a heavy cream substitute which, when used in various food products, significantly extends the shelf life of such products.

### SUMMARY OF THE INVENTION

According to the present invention, a method for producing a stabilized dairy base material or heavy cream substitute for use in food products, including savory sauces and desserts, is provided. The method of the present invention enables the production of savory sauce and dessert-type dairy products using the stabilized dairy base material to provide a secondary barrier to the growth of pathogenic and spoilage-causing organisms, while still maintaining the functional characteristics of conventionally produced savory sauce and dessert-type dairy products. The stabilized base material of the present invention has similar functional properties as heavy cream, and can be used in the same manner as heavy cream, but with increased microbiological stability. The method of the present invention was unexpectedly found to enhance the safety of dessert and savory sauce products and significantly extend the shelf life of such products.

According to the present invention, a milk/cream mixture is fermented with a nisin-producing culture to form a curd and whey composition. The nisin-containing curd material is either the resulting curd and whey composition (i.e., without separation of the curd and whey) or the separated curd composition (i.e., the curd without the whey). The nisin-containing curd material is then combined with cream and other ingredients to produce a savory and stabilized dairy base material for use as a heavy cream substitute. More specifically, the stabilized dairy base material of the present invention is prepared by combining (1) a nisin-containing curd; (2) a powdered preblend (preferably containing milk solids (e.g., whey protein concentrate, dried sweet whey, and the like), salt, carob bean gum, and sorbic acid); and (3) milk/cream and/or vegetable oil. Suitable vegetable oils include, for example, hydrogenated soybean oil, canola oil, palm oil, and the like as well as mixtures thereof.

### BRIEF DESCRIPTION OF THE DRAWINGS

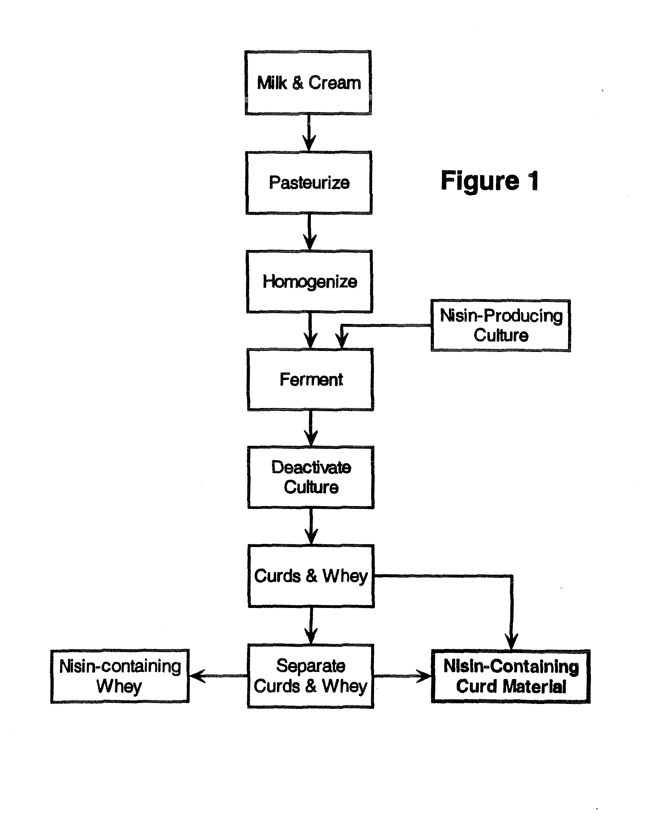

FIG. 1 provides a flow diagram showing the general method of producing the nisin-containing curd of the present invention; and

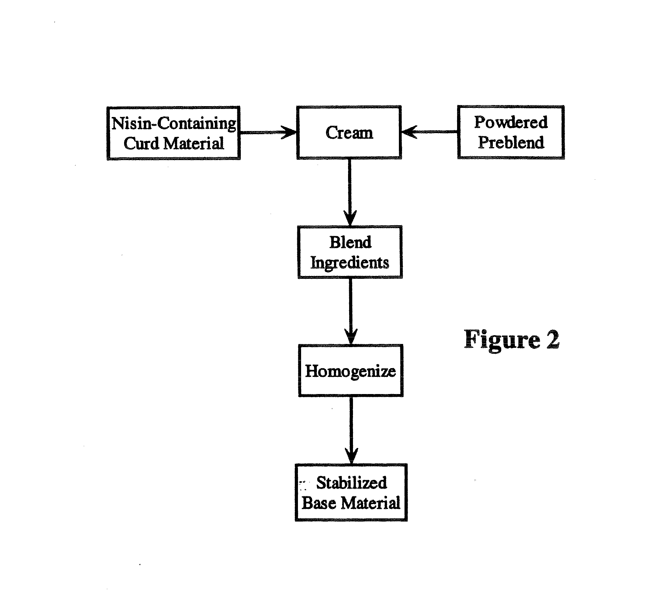

FIG. 2 provides a flow diagram showing the general method of producing the base material of the present invention from the nisin-containing curd.

### DETAILED DESCRIPTION

Due to the potential of microbial contamination in conventionally-produced heavy cream-containing food products, including savory sauce and dessert-type dairy products, a method of producing such products which minimizes this potential is desirable. The present invention is concerned with a method for producing a stabilized dairy base material for use as a heavy cream replacement or substitute in such food products. It will be recognized by one skilled in the art that the methods and compositions of the present invention are applicable to many types of food products which are normally prepared containing heavy cream, including dessert and savory sauce products.

According to the present invention, a method for producing a stabilized dairy base material for use as a replacement or substitution for heavy cream is provided. The method of the present invention enables the production of a heavy cream substitute which can be used in savory sauce and dessert-type dairy products, that has a secondary barrier to the growth of pathogenic and spoilage-causing organisms, while still maintaining the functional characteristics of heavy cream when incorporated into various dessert and sauce products. The method of the present invention was unexpectedly found to enhance the safety of such dessert and savory sauce products and significantly extend the shelf life of such products. According to the present invention, a milk/cream mixture is fermented with a nisin-producing culture, converted to a nisin-containing curd material, and then combined with cream to produce a savory base material for use as a heavy cream substitute which is especially useful in either sauce or dessert applications.

The stabilized dairy base material of the present invention may also contain a vegetable oil. Suitable vegetable oils include, for example, hydrogenated soybean oil, canola oil, palm oil, and the like as well as mixtures thereof.

In accordance with the present invention, the cream replacement may be produced by combining (1) nisin-containing curd material and (2) cream. Preferably, the cream replacement may be produced by combining (1) nisin-containing curd material; (2) powdered preblend (milk solids such as whey protein concentrate and/or dried sweet whey, salt, gum such as carob bean gum, and optionally an edible acid such as sorbic acid); and (3) cream. Although it is generally preferred to add a powdered preblend containing the listed ingredients, the ingredients can be added separately if desired. Preferably, the cream replacement has a pH greater than about 5, and more preferably about 5.1 to about 5.5.

The nisin-containing curd material is formed by fermenting milk and/or cream using a nisin-producing culture. Preferably a milk and cream mixture is used to prepared the nisin-containing curd. The milk may be any type of milk generally used in the production of desserts and savory sauces; preferably the milk is whole milk from cows. Preferably the milk comprises about 10 to about 15 percent total solids, about 3 to about 4 percent fat, about 2 to about 4 percent protein, and about 4 to about 6 percent lactose. Likewise, the cream may be any cream generally used in the production of desserts and savory sauces, such as heavy or light cream; preferably the cream is heavy cream. Preferably, the cream comprises about 42 to about 46 percent total solids, about 36 to about 40 percent fat, about 1 to about 3 percent protein, and about 1 to about 3 percent lactose. The amounts of milk and cream to be mixed may be selected according to the desired characteristics of the final product, but preferably milk forms about 50 to about 70 percent of the mixture and cream forms about 30 to about 50 percent of the mixture; more preferably, milk forms about 60 percent of the mixture and cream forms about 40 percent of the mixture. The milk and cream may be mixed under a variety of conditions, but due to the fact that both the milk and cream are generally stored at refrigerated temperatures, the milk and cream are preferably mixed at a temperature of about 35 to about 45°F and preferably at about 40°F. Hereinafter, the invention will be described assuming the preferred milk/cream mixture is used as the starting substrate.

After the milk and cream are mixed, the milk/cream mixture is preferably heated to about 145 to about 180°F, and more preferably to about 168°F, for about 10 to about 30 seconds, to prepare the mixture for homogenization. The milk/cream mixture is then homogenized to evenly disperse the milk and cream within the mixture. Generally homogenization can be carried out using convention techniques and equipment; for example, the mixture can be passed through a small orifice, or set of orifices, at high pressure, such that the fat globules in the milk and cream are broken up into smaller globules which remain suspended evenly throughout the mixture. Preferably, the mixture is subjected to a two stage homogenization process, with the first stage being at a pressure of about 400 to about 4200 psi (preferably about 800 to about 1500 psi) and the second stage being at a pressure of about 200 to about 800 psi (preferably about 400 to about 600 psi).

After homogenization, the milk/cream mixture is cooled, or allowed to cool, to about room temperature (preferably to about 70 to about 75°F), after which, a nisin-producing culture is added. The nisin-producing culture may be any nisin-producing culture, but the culture is preferably *Lactococcus lactis* subsp. *lactis.* The amount of the nisin-producing culture added to the mixture is that sufficient to provide levels of nisin sufficient to inhibit the growth of undesirable microorganisms in the desserts or savory sauces within an acceptable period of time. Generally, such effective amounts range from about 1 percent to about 10 percent of the final product, or more preferably from about 3 percent to about 5 percent. The nisin-producing culture is generally added in sufficient amounts such that the final concentration of active nisin in the mixture undergoing fermentation is at least about 200 IU/g, preferably about 250 to about 1200 IU nisin/g, and more preferably about 500 to about 900 IU nisinlg.

Smaller or larger amounts of the nisin-producing culture may be added if desired. Of course, longer or shorter fermentation periods, respectively, may be required to achieve the desired nisin level. Preferably, the amount of nisin-producing culture added to the mixture is selected as an amount that balances the cost of the nisin-producing culture and the expense of prolonged fermentation periods. For example, the nisin-producing culture may be added in an amount of about 0.01 to about 0.1 percent of the milk/cream mixture and, preferably, about 0.04 to about 0.06 percent of the milk/cream mixture.

The duration of the fermentation period is generally dependent upon the amount of nisin-producing culture added to the mixture. Generally, the fermentation duration is about 12 to about 20 hours. As discussed above, if smaller amounts of the nisin-producing culture are added to the mixture, longer fermentation times may be required, while shorter fermentation times may be necessary if larger amounts of the nisin-producing culture are used. For example, if the nisin-producing culture is added to the mixture in an amount of about 0.05 percent of the mixture, the fermentation time may be about 14 hours. One of ordinary skill in the art may determine acceptable fermentation times for a given amount of nisin-producing culture to be added and the desired nisin levels in the final product.

Once sufficient fermentation has occurred (as determined by the desired nisin levels), the milk/cream mixture containing the nisin-producing culture is heated in order to deactivate the nisin-producing culture. The mixture may be heated to any temperature high enough to deactivate the culture; the deactivation temperature should, of course, be low enough to avoid any undesirable effects on the mixture. Generally a temperature greater than about 160°F, and preferably about 175 to about 185°F, for about 20 to about 30 seconds, is sufficient to deactivate the nisin-producing culture. After fermentation and deactivation of the nisin-producing culture, a cultured mixture containing nisin-containing curds and nisin-containing whey is obtained.

The nisin-containing curd and nisin-containing whey in the cultured mixture can be used without separation or the nisin-containing whey from the mixture can be separated by any method known in the art. For example, the separation of the cultured mixture may be accomplished through straining, draining, filtering, centrifugation, or the like. Generally, the cultured mixture contains about 60 to about 65 percent nisin-containing curd and about 35 to about 40 percent nisin-containing whey. After separation, the nisin-containing curd generally comprises about 30 to about 34 percent fat, about 3 to about 5 percent protein, and about 2 to about 3 percent lactose. Likewise, the nisin-containing whey generally comprises about 0.1 to about 0.5 percent fat, about 0.5 to about 1 percent protein, and about 3 to about 4.5 percent lactose. The nisin-containing whey, if separately collected, can be, and preferably is, used in the manufacturing of other products (e.g., cooked meat products, mayonnaise products, cream cheese products, and fermented dairy products as disclosed in U.S. Patents 6,242,017, 6,113,954, 6,110,509, and 6,136,351, respectively) to provide increased microbiological stability.

For purposes of this invention, the term "nisin-containing curd material" is intended to include the curd product, either including the whey or separated from the whey, derived from a nisin-producing culture. In other words, the "nisin-containing whey material" is either the combined nisin-containing whey and curd mixture or the nisin-containing curd which has been separated from the nisin-containing whey. Generally, the preferred nisin-containing curd material includes both the curd and the whey from the nisin-producing culture fermentation. While one process for obtaining the nisin-containing curd material is discussed above, such a nisin-containing curd material may also be obtained by any equivalent procedure involving the fermentation of a nisin-producing microorganism in a dairy based liquid. In one such procedure, a pasteurized dairy product such as milk or cream (rather than a mixture of the two) is first inoculated with the nisin-producing microorganisms. As the dairy product curdles, the culture forms the nisin-containing curd material. The nisin-containing curd material can be treated as described above to provide the stabilized dairy base material. In an alternative procedure, the nisin-containing curd can be obtained from the fermentation of a fortified cheese composition using nisin-producing microorganisms. In this procedure, after the pH in the fermentation has fallen to about 5.5, the pH is then maintained at this value for 8 to about 10 hours before allowing the pH to drop further. The nisin-containing curd material is then employed in the products and methods of the present invention.

The fermenting cultures capable of producing nisin-containing curd may also have the potential of secreting other fermentation products which may be contained in the nisin-containing curd material used in the present invention. Thus, in addition to nisin, there may be further components, including lactate, present in the nisin-containing curd material produced by the fermentation. Among such components may be certain substances which contribute to the beneficial properties of the preservable preparations of the invention, and to the beneficial effects of the methods of the invention. Without wishing to limited the scope of this invention, therefore, the term "nisin-containing curd material" encompasses all components contained therein, both those currently known and those which may remain uncharacterized at the present time, that contribute to the beneficial attributes of the present invention.

The optional powdered preblend preferably comprises a dry mixture of about 50 to about 60 percent whey protein concentrate, about 20 to about 25 percent dried sweet whey, about 10 to about 15 percent salt, about 3 to about 6 percent carob bean gum, and about 0.5 to about 1 percent sorbic acid. The powdered preblend is preferably well mixed, such that the ingredients are well dispensed within the preblend. For purposes of this invention, "preblend" includes the individual components added alone, or in mixtures of two or more of the components. Preferably, the preblend is a dry mixture of all the components. Use of the preblend provides improved freeze-thaw stability.

The final component of the base material for preparing the heavy cream replacement is cream. Preferably, a heavy cream is used, but other types of cream (e.g., light cream, plastic cream, anhydrous milkfat) may be used. For example, cream containing about 25 to about 80 percent fat may be used. More preferably, a heavy cream comprising about 55 to about 60 percent fat, about 1 to about 2 percent protein, and about 3 to about 4.5 percent lactose is used.

The components of the base material (i.e., the nisin-containing curd material, the optional powdered preblend, and the cream) are then combined and mixed using conventional techniques and equipment. The mixture may comprise 10 to about 90 percent nisin-containing curd material, 0 to about 10 percent powdered preblend, and about 10 to about 90 percent cream. Preferably, the stabilized dairy base material contains about 70 to about 75 percent nisin-containing curd material, about 3 to about 5 percent powdered preblend, and about 20 to about 30 percent cream. However, differing amounts of the components may also be used to form stabilized dairy base materials with slightly different characteristics as desired. The resulting mixture is then homogenized to form the stabilized dairy base material. The homogenization is preferably carried out at a pressure of about 750 to about 4,500 psi and, more preferably, at about 1,500 psi. The pressure at which the homogenization occurs may be selected according to the desired firmness of the stabilized dairy base material, with a lower pressures providing lower firmness and higher homogenization pressures providing higher firmness.

The stabilized dairy base material of this invention is a savory, sweet cream or dairy tasting product with a pH of about 4.7 to about 5.2 and has flavor, texture, and functionality similar to conventional heavy cream. Generally the stabilized dairy base mixture comprises about 35 to about 40 percent fat, about 3 to about 5 percent protein, and about 4 to about 5 percent lactose.

The stabilized dairy base material is ideally suited for preparing desserts (e.g., Tiramisu) and savory sauces (e.g., Alfredo) and can be used in the same manner as conventional heavy cream. The stabilized dairy base material exhibits an extended shelf life about 90 to about 120 days under refrigerated storage conditions. Conventional heavy cream generally has a shelf life of about 3 to 10 days under refrigerated storage conditions.

Additionally, the stabilized dairy base material produced according to the present invention also provides products produced therefrom with a nutritional advantage. That is, the base material provides a healthier alternative to standard dairy products by significantly reducing the overall fat content of the final product, while maintaining a flavor and texture similar to conventionally-produced products. This reduction in the overall fat content appears to be due to the use of both milk and cream to produce the nisin-containing curd material as compared to conventionally produced cream or heavy cream. Generally, the stabilized dairy base material according to the present invention has about 10 to about 20 percent less fat than conventional heavy cream.

Therefore, the use of a nisin-producing culture to produce a nisin-containing curd material results in: (1) a stabilized dairy base material resistant to the growth of pathogenic and/or spoilage-causing microorganisms; and (2) a product without an undesirable tart or cultured flavor which is characteristic of cream cheese.

The following examples are provided to illustrate the invention and not to limit it. Unless otherwise noted, all percentages given herein are weight percentages. Firmness was measured using a TA-XT2 Texture Analyzer with a Ta-4 probe (Texture Technologies Corp., Scarsdale, NY). Samples were tempered overnight at refrigeration temperatures. All references (including, but not limited to, publications, patent publications, and patents) cited herein are incorporated hereby in their entireties by reference.

**Example 1.** A nisin-containing curd was produced according to the present invention. Milk (1,280 pounds) and cream (820 pounds) were blended together at about 40°F. The milk used contained about 12.3 percent total solids, about 3.6 percent fat, about 3.1 percent protein, and about 4.9 percent lactose. The cream used contained about 43.9 percent total solids, 39.0 percent fat, 1.8 percent protein, and 2.0 percent lactose. The milk/cream mixture was heated to about 140°F for about 30 minutes and then subjected to a two-stage homogenization (first stage at about 1,600 psi and second stage at about 500 psi. The temperature after homogenization was about 150°F. The homogenized material was the pasteurized (about 170°F for about 16 seconds).

The homogenized and pasteurized mixture (2100 pounds) was cooled to about 72°F and a nisin-producing culture (16 pounds; *Lactococcus lactis* subsp. *lactis)* was added. The resulting mixture was fermented at about 86°F for about 14 hours at which time a curd and whey mixture was obtained. After fermentation, the mixture was heated to about 180°F for about 5 minutes to deactivate the nisin-producing culture.

The nisin-containing curd from the cultured mixture was then separated using a pilot scale centrifuge (Westfalia Separator, model KSA6, Deutschland GMBH, 59302 Oelde, Germany) to obtain about 1,293 pounds of nisin-containing curd and about 823 pounds of nisin-containing whey. The nisin-containing curd contained about 31.3 percent fat, about 3.9 percent protein, and about 2.6 percent lactose. The nisin-containing whey contained about 0.25 percent fat, about 0.7 percent protein, and about 3.8 percent lactose.

A dry preblend (about 22.7 pounds) was prepared by mixing about 12.7 pounds whey protein concentrate, about 5.5 pounds dried sweet whey, about 3.1 pounds salt, about 1.1 pounds carob bean gum, and about 0.2 sorbic acid.

The nisin-containing curd (427.3 pounds), powdered preblend (22.7 pounds), and pasteurized heavy cream (150 pounds; containing about 57.1 percent fat, about 1.4 percent protein, and about 3.7 percent lactose) were mixed together using a conventional mixer (i.e., Breddo). The resulting mixture was divided into four equal portions which were then homogenized at about 45°F under varying pressure conditions using a two stage pilot scale homogenizer ([APV, Gaulin, Inc., APV Americas, Lake Mills, Wisconsin). Inventive Sample 1 was homogenized at 1,500 psi; Inventive Sample 2 at 2,500 psi; Inventive Sample 3 at 3,500 psi; and Inventive Sample 4 at 4,500 psi.

Stabilities of these Inventive Samples, as well as appropriate controls (i.e., nisin-containing curd alone and heavy cream (57 percent fat)), were determined by evaluation at time zero and after 50 days storage at about 45°F. For stability tests, the homogenized samples were hot filled (>about 160°F) and sealed in suitable containers. The following stability data was obtained:

| **Sample** | **Nisin Activity (IU/ml)** | | **Aerobic Spore-formers (number per ml)** | |
|---|---|---|---|---|
| | **Time = 0** | **Time = 50 days** | **Time = 0** | **Time = 50 days** |
| Inventive Sample 1 | 412 | 370 | <10 | <10 |
| Inventive Sample 4 | 449 | 391 | <10 | <10 |
| Nisin-containing Curd (control) | 504 | - | <10 | - |
| 57% Heavy Cream Curd (control) | ND | - | > 10⁵ | - |

Thus, the stabilized dairy base material of the present invention demonstrates a shelf life of at least 50 days under the storage conditions used. Since the nisin activity at 50 days remains high, even longer shelf lives are expected.

Samples 1-4 and a control were evaluated for oganoleptic and other properties. The following results were obtained:

| **Inventive Sample** | **pH** | **Firmness (grams)** | **Organoleptic Properties** |
|---|---|---|---|
| 1 | 4.8 | 2718 | Gummy, softer mouthfeel, clean creamy flavor |
| 2 | 4.8 | 3652 | Tangy aftertaste |
| 3 | 4.8 | 3821 | More buttery creamy flavor |
| 4 | 4.75 | 5069 | Firmer, gummy, creamy flavor |
| Control* | 5.3 | 1237 | Softest with strong creamy dairy or fatty flavor with slightly gritty mouthfeel |

| | | | |
|---|---|---|---|
| * Lombardi Mascarpone (Franklin Foods) containing pasteurized cream, milk solids, acid and potassium sorbate. | | | |

**Example 2.** Tiramisu desserts were prepared using Inventive Samples 1-4 in Example 1 and conventional mascapone (Franiclin Foods) using the following ingredients:

| **Ingredient** | **Amount (%)** |
|---|---|
| Egg yolk | 6.9 |
| Egg white | 11.4 |
| Sugar | 15.8 |
| Italian Espresso | 20.9 |
| Mascarpone (control) or Inventive Stabilized Dairy Base Material | 26.1 |
| Cocoa | 1.3 |
| Ladyfingers | 17.7 |

The egg yolks, about 10 percent of the Italian espresso, and about 95 percent of the sugar were mixed for about 2.5 minutes. The mascarpone (control) or inventive stabilized dairy base material (Inventive Samples 1, 2, 3, or 4 of Example 1) were added and the mixture was mixed for about 4 minutes to form a blended mixture. In a separate bowl, the egg whites and remainder of the sugar were mixed at high speed until stiff peaks formed (about 5 minutes). The egg whites/sugar mixture was then folded into the blended mixture to form a second blended mixture. The remaining espresso was used to brush one side of each Ladyfinger and to layer the bottom and sides of a pan. About 30 percent of the second blended mixture was spread on the bottom of a loaf bread pan and sprinkled with about 40 percent of the cocoa. The Ladyfingers were layered on top of the second blended mixture/cocoa layer in the pan and then covered with the remaining mascarpone and cocoa. The resulting desserts were refrigerated for about 1 hour before evaluation.

The firmness of each of the Tiramisu products prepared using inventive Samples 1-4 and mascarpone (control) was then determined in various locations (i.e., outside, center, and middle) in the dessert. The organoleptic and other properties were also evaluated. The results are shown below.

| **Sample** | **Texture (grams)** | | | **Observations** |
|---|---|---|---|---|
| | **Outside** | **Center** | **Middle** | |
| Inventive Sample 1 | 6 | 7 | 7.5 | Mixing: smooth with no lumps. After refrigeration: good creamy flavor and good set. |
| Inventive Sample 2 | 8 | 6 | 9 | Mixing: smooth with few small lumps. After refrigeration: good creamy flavor but slightly runny. |
| Inventive Sample 3 | 12 | 16 | 13 | Mixing: smooth with no jumps. After refrigeration: good creamy flavor and good set. |
| Inventive Sample 4 | 15 | 13 | 14 | Mixing: smooth with few small lumps. After refrigeration: good creamy flavor but slightly runny. |
| Mascarpone (control; Franklin Foods) | 13 | 14 | 14 | Mixing: smooth with no lumps. After refrigeration: good creamy flavor, set well but slightly runny. |

Inventive Sample 1 produced the softest and most preferred Tiramisu product due to its good clean flavor and mouthfeel. Firmness increased as the homogenization pressure for preparation of the stabilized dairy base material increased (i.e., from Inventive Sample 1 to Inventive Sample 4). Overall, desserts prepared using inventive Samples 1 and 3 were preferred, with the dessert prepared using inventive Samples 1 being most preferred.

**Example 3.** Heavy cream substitutes consisting of 50:50 mixtures (50:50) of a soft cheese analog (i.e., Kraft Cheezkake Blend™ (Kraft Food Ingredients, Memphis, TN) and nisin-containing sweet cream, along with control samples (i.e., 50:50 mixtures of the soft cheese analog and sweet cream), were subjected to refrigerated dairy case challenge studies. This example also illustrates the preparation of a heavy cream substitute containing a vegetable oil.

The soft cheese analog, prepared from milk, palm oil, cheese culture, salt, carob bean gum, mono- and diglycerides, and color, contained about 34 percent fat, about 54 percent moisture, less than about 11 percent milkfat, and about 23 percent palm oil.

Sweet cream, standardized with whole milk, was subjected to a controlled nisin-producing fermentation step in a manner similar to Example 1. The first phase of culturing allowed the pH to drop to 5.5 at which time the neutralization step was initiated. The pH was maintained at 5.5 for ten hours via sodium hydroxide addition, after which, the pH was allowed to drop to 5.1. The cultured cream was adjusted with sodium hydroxide to pH 6.6. The cultured cream was combined with soft cheese analog, homogenized at 1600 psi to yield a heavy cream substitute with a pH value of 5.1. The sample was split into two samples: inventive sample 1 was kept at pH 5.1; inventive sample 2 was adjusted to pH 5.5 with sodium hydroxide. The higher pH sample presents a higher microbiological challenge.

Challenge Studies: Counts were performed initially (Time 0) and at sampling points throughout the study to determine level of background flora and its change over time. Since the product were supplied hot (> 170°F) and product was hot filled (>160°F) and sealed in-sample tubes, those organisms forming heat-resistant spores should be the only ones to survive the thermal process/hot fill conditions. All samples were serially diluted with peptone water and plated using Brain Heart Infusion (BHI) Agar. These plates were then incubated aerobically for 48 hours prior to enumeration. Resultant colony forming units were observed for morphology, Gram stained, and the like; all surviving aerobic organisms appeared to be of the spore-forming *Bacillus* genus.

Inoculation was with the anaerobic spore forming pathogen, Clostridium botulinum, using a suspension containing about 2.6x10⁵ CFU/ml. The effectiveness inventive samples against *C. botulinum* was measured by the presence or absence of toxin formed as a direct result of outgrowth of the *C. botulinum* spores. *C. botulinum* levels over time were not determined.

Background aerobic spore former counts were based on naturally occurring organisms normally present in the products.

The results are shown in Tables 1-3 (control in Table 1 and inventive samples in Tables 2 and 3). The following abbreviations are used in the Tables: NT = not tested; ND = not detected; and for Mouse Bioassay, "-" indicates no toxin detected, "+" indicates toxin detected with mouse deaths occured, and "(+)" indicates low level of toxin (symptoms but no deaths).

**Table 1.**

| **Control** | | **Time at 86°F (days)** | | | | | | | | |
|---|---|---|---|---|---|---|---|---|---|---|
| | | 0 | 1 | 2 | 3 | 4 | 5 | 6 | 7 | 11 |
| pH | | 5.56 | 5.53 | 5.52 | 5.52 | 5.51 | 5.66 | 5.66 | 5.26 | 6.01 |
| Nisin Concentration (IU/g) | | ND | NT | NT | NT | NT | NT | NT | ND | ND |
| Aerobic Background (CFU/g) | | 20 | >10⁴ | >10⁴ | >10⁴ | >10⁵ | >10⁶ | NT | NT | NT |
| Anaerobic Background (CFU/g) | | <10 | <10 | <10 | <10 | <10 | <10 | NT | NT | NT |
| Proteolytic *Botulinum* Inoculum Count: | | | ND | | | | | | | |
| | uninoculated | <10 | | | | | | | | |
| | Inoculated | 130 | | | | | | | | |
| Mouse Bioassay: | | | | | | | | | | |
| | uninoculated | - | - | - | - | - | - | - | - | - |
| | inoculated | - | - | - | - | (+) | - | + | + | + |
| | | | | | | | | | | |

| **Control** | | **1 Week at 65°F** | **Time at 55°F (weeks)** | | | | | | | |
|---|---|---|---|---|---|---|---|---|---|---|
| | | | 2 | 4 | 6 | 8 | 10 | 12 | 15 | 20 |
| pH | | 5.51 | 5.46 | 5.54 | 5.44 | 5.46 | 5.46 | 5.55 | 5.55 | 5.50 |
| Nisin Concentration (IU/g) | | ND | ND | ND | ND | ND | ND | ND | ND | ND |
| Aerobic Background (CFU/g) | | >10⁴ | 10 | 10 | 1.5x10⁴ | 4.5x10⁴ | NT | NT | NT | NT |
| Anaerobic Background (CFU/g) | | <10 | <10 | NT | NT | NT | NT | NT | NT | NT |
| Proteolytic *Botulinum* lnoculum Count: | | **ND** | | | | | | | | |
| | uninoculated | | | | | | | | | |
| | Inoculated | | | | | | | | | |
| Mouse Bioassay: | | | | | | | | | | |
| | uninoculated. | - | - | - | - | - | - | - | - | - |
| | inoculated | - | - | - | - | - | - | - | - | - |

**Table 2.**

| **Inventive Sample 1** | | **Time at 86°F (days)** | | | | | | | | |
|---|---|---|---|---|---|---|---|---|---|---|
| | | 0 | 1 | 2 | 3 | 4 | 5 | 6 | 7 | 11 |
| pH | | 5.50 | 5.49 | 5.49 | 5.48 | 5.47 | 5.47 | 5.47 | 5.45 | 5.52 |
| Nisin Concentration (IU/g) | | 543 | NT | NT | NT | NT | NT | NT | 488 | 433 |
| Aerobic Background (CFU/g) | | 10 | <10 | 10 | <10 | <10 | <10 | <10 | <10 | <10 |
| Anaerobic Background (CFU/g) | | <10 | <10 | <10 | <10 | <10 | <10 | <10 | <10 | NT |
| Proteolytic *Botulinum* Inoculum Count: | | | ND | | | | | | | |
| | uninoculated | <10 | | | | | | | | |
| | inoculated | 140 | | | | | | | | |
| Mouse Bioassay: | | | | | | | | | | |
| | uninoculated | - | - | - | - | - | - | - | - | - |
| | inoculated | - | - | - | - | - | - | - | - | - |

| | | | | | | | | | | |
|---|---|---|---|---|---|---|---|---|---|---|
| **Inventive Sample 1** | | **1 Week at 65°F** | **Time at 55°F (weeks)** | | | | | | | |
| | | | 2 | 4 | 8 | 8 | 10 | 12 | 15 | 20 |
| pH | | 5.47 | 5.44 | 5.52 | 5.42 | 5.42 | 5.41 | 5.47 | 5.49 | 5.50 |
| Nisin Concentration (IU/g) | | 481 | 436 | 407 | 408 | 415 | 398 | 402 | 401 | 409 |
| Aerobic Background (CFU/g) (*Bacillus* spp.) | | <10 | <10 | 10 | <10 | 10 | <10 | <10 | <10 | <10 |
| Anaerobic Background (CFU/g) | | <10 | <10 | NT | NT | NT | NT | NT | NT | NT |
| Proteolytic Botulinum lnoculum Count: | | ND | | | | | | | | |
| | uninoculated | | | | | | | | | |
| | inoculated | | | | | | | | | |
| Mouse Bioassay: | | | | | | | | | | |
| | uninoculated | - | - | - | - | - | - | - | - | - |
| | inoculated | - | - | - | - | - | - | - | - | - |

**Table 3.**

| **Inventive Sample 2** | **Time at 86°F (days)** | | | | | | | | |
|---|---|---|---|---|---|---|---|---|---|
| | 0 | 1 | 2 | 3 | 4 | 5 | 6 | 7 | 11 |
| pH | 5.13 | 5.12 | 5.12 | 6.12 | 5.11 | 5.12 | 5.11 | 5.09 | 5.12 |
| Nisin Concentration (IU/g) | 568 | NT | NT | NT | NT | NT | NT | 487 | 437 |
| Aerobic Background (CFU/g) | <10 | <10 | <10 | <10 | <10 | <10 | <10 | <10 | 10 |
| Anaerobic Background (CFU/g) | <10 | <10 | <10 | <10 | <10 | <10 | <10 | <10 | NT |
| Proteolytic Botulinum inoculum Count: | | ND | | | | | | | |
| uninoculated | <10 | | | | | | | | |
| inoculated | 140 | | | | | | | | |
| Mouse Bioassay: | | | | | | | | | |
| uninoculated | - | - | - | - | - | - | - | - | - |
| inoculated | - | - | - | - | - | - | - | - | - |
| | | | | | | | | | |

| **Inventive Sample 2** | **1 week at 65°F** | **Time at 55-F (weeks)** | | | | | | | |
|---|---|---|---|---|---|---|---|---|---|
| | | 2 | 4 | 6 | 8 | 10 | 12 | 16 | 20 |
| pH | 5.09 | 5.08 | 5.12 | 5.06 | 5.06 | 5.06 | 5.14 | 5.14 | 5.15 |
| Nisin Concentration (IU/g) Nisin Concentration (IU/g) | 485 | 435 | 440 | 432 | 430 | 419 | 413 | 415 | 413 |
| Aerobic Background (CFU/g) (Bacillus spp.) | <10 | <10 | 10 | <10 | <10 | <10 | <10 | <10 | <10 |
| Anaerobic Background (CFU/g) | <10 | <10 | NT | NT | NT | NT | NT | NT | NT |
| Proteolytic *Botulinum* Inoculum Count: | ND | | | | | | | | |
| uninoculated | | | | | | | | | |
| inoculated | | | | | | | | | |
| Mouse Bioassay: | | | | | | | | | |
| uninoculated | - | - | - | - | - | - | - | - | - |
| inoculated | - | - | - | - | - | - | - | - | - |

**Example 4.** A heavy cream substitute was prepared as in Example 3 except that the soft cheese analogue contained partially hydrogenated soybean oil rather than palm oil. The resulting heavy cream substitute had similar properties.

## Claims

1. A stabilized dairy base material adapted for use in a food product, said stabilized dairy base material comprising a nisin-containing curd material and a dairy composition; wherein the nisin-containing curd material is derived from fermentation of milk, cream, or mixtures thereof with a nisin-producing culture and wherein the stabilized dairy base material contains sufficient nisin-containing curd material to provide at least about 200 IU nisin/g in the stabilized dairy base material.

2. The stabilized dairy base material of Claim 1, wherein the dairy composition comprises cream and wherein the food product in which the base material is to be used is a savory sauce or dessert product.

3. The stabilized dairy base material of Claim 1 or 2, wherein the nisin-containing curd material is prepared by a process comprising:
(a) pasteurizing the milk, cream, or mixtures thereof to form a pasteurized mixture;
(b) inoculating the pasteurized mixture with the nisin-producing culture to form a inoculated mixture, wherein the nisin-producing culture comprises a nisin-producing microorganism;
(c) incubating the inoculated mixture for a time sufficient to provide a whey and curd mixture; and
(d) separating curd from the whey and curd mixture, wherein the separated curd is the nisin-containing curd material.

4. The stabilized dairy base material of Claim 1 or 2, wherein the nisin-containing curd material is prepared by a process comprising:
(a) pasteurizing the milk, cream, or mixtures thereof to form a pasteurized mixture;
(b) inoculating the pasteurized mixture with the nisin-producing culture to form a inoculated mixture, wherein the nisin-producing culture comprises a nisin-producing microorganism; and
(c) incubating the inoculated mixture for a time sufficient to provide a whey and curd mixture, wherein the whey and curd mixture is the nisin-containing curd material.

5. The stabilized dairy base material of any one of Claims 1 to 4, wherein the stabilized dairy base material inhibits the growth of a microorganism chosen from the group consisting of *Clostridium botulinum, Clostridium perfingens, Listeria monocytogenes, Bacillus cereus, Staphylococcus aureus,* and *Enterococcus faecalis.*

6. The stabilized dairy base material of any one of Claims 1 to 5, wherein the stabilized dairy base material inhibits the growth of *Clostridium botulinum.*

7. The stabilized dairy base material of any one of Claims 1 to 6, wherein the stabilized dairy base material contains sufficient nisin-containing curd to provide about 250 to about 1200 IU nisin/g in the stabilized dairy base material.

8. The stabilized dairy base material of any one of Claims 1 to 7, wherein the stabilized dairy base material contains sufficient nisin-containing curd to provide about 500 to about 900 IU nisin/g in the stabilized dairy base material.

9. The stabilized dairy base material of any one of Claims 1 to 8, wherein the dairy composition comprises cream.

10. The stabilized dairy base material of any one of Claim 1 to 9, wherein the stabilized dairy base material further comprises milk solids, salt, a gum, and an edible acid.

11. The stabilized dairy base material of Claim 10, wherein the milk solids are whey protein concentrate, dried sweet whey, or mixtures thereof, wherein the gum is carob bean gum, and wherein the edible acid is sorbic acid.

12. A method for preparing a stabilized dairy base material adapted for use in a food product, said method comprising:
(a) preparing a first dairy composition comprising milk, cream, or mixtures thereof;
(b) inoculating the first dairy composition with a nisin-producing culture;
(c) fermenting the first dairy composition to form a nisin-containing curd and whey mixture, wherein the nisin-containing curd and whey mixture is the nisin-containing curd material; and
(d) combining the nisin-containing curd material with a second dairy composition to obtain the stabilized dairy base material,
wherein stabilized dairy base material contains sufficient nisin-containing curd to provide at least about 200 IU nisin/g in the stabilized dairy base material.

13. The method of Claim 12, wherein the nisin-containing curd material of step (c) is treated to separate the nisin-containing curd from the nisin-containing whey and wherein the separated nisin-containing curd is used as the nisin-containing curd material in step (d).

14. The method of Claim 12 or 13, wherein the second dairy composition is cream.

15. The method of any one of Claims 12 to 14, wherein the stabilized dairy base material further comprises a preblend comprising whey protein concentrate, dried sweet whey, salt, carob bean gum, and sorbic acid.

16. The method of any one of Claims 12 to 15, wherein the preblend is combined with the nisin-containing curd and the second dairy composition in step (d).

17. A method of inhibiting the growth of pathogenic microorganisms in a food product, said method comprising incorporating a stabilized dairy base material into the food product, wherein the stabilized dairy base material comprises a nisin-containing curd material and a dairy composition; wherein the nisin-containing curd material is derived from fermentation of milk, cream, or mixtures thereof with a nisin-producing culture and wherein the stabilized dairy base material contains sufficient nisin-containing curd material to provide at least about 200 IU nisin/g in the stabilized dairy base material.

18. The method of Claim 17, wherein the food product contains about 20 to about 80 percent of the stabilized dairy base material and the food product is a dairy-based food product.

19. The method of Claim 17 or 18, wherein the dairy composition comprises cream and wherein the food product is a savory sauce or dessert product.

20. The method of any one of Claim 17 to 19, wherein the nisin-containing curd material is prepared by a first process or a second process,
wherein the first process comprises:
(a) pasteurizing the milk, cream, or mixtures thereof to form a first pasteurized mixture;
(b) inoculating the first pasteurized mixture with the nisin-producing culture to form a first inoculated mixture, wherein the nisin-producing culture comprises a first nisin-producing microorganism;
(c) incubating the first inoculated mixture for a time sufficient to provide a first whey and curd mixture, wherein the first whey and curd mixture is the nisin-containing curd material; and
wherein the second process comprises:
(a) pasteurizing the milk, cream, or mixtures thereof to form a second pasteurized mixture;
(b) inoculating the second pasteurized mixture with the nisin-producing culture to form a second inoculated mixture, wherein the nisin-producing culture comprises a second nisin-producing microorganism;
(c) incubating the second inoculated mixture for a time sufficient to provide a second whey and curd mixture; and
(d) separating curd from the second whey and curd mixture, wherein the separated curd is the nisin-containing curd material.

21. The method of any one of Claims 17 to 20, wherein the dairy composition comprises cream.

22. The method of any one of Claims 17 to 21, wherein the stabilized dairy base material further comprises a whey-containing material, salt, a gum, and an edible acid.

23. The method of Claim 22, wherein the whey-containing material is whey protein concentrate, dried sweet whey, or mixtures thereof, wherein the gum is carob bean gum, and wherein the edible acid is sorbic acid.

24. The method of any one of Claims 12 to 23, wherein the stabilized dairy base material **inhibits the growth of a microorganism chosen from the group consisting of *Clostridium botulinum, Clostridium perfringens, Listeria monocytogenes, Bacillus cereus, Staphylococcus aureus,* and *Enterococcus faecalis.***

25. The method of any one of Claims 12 to 24, wherein the stabilized dairy base material **inhibits the growth of *Clostridium botulinum.***

26. The method of any one of Claims 12 to 25, wherein the stabilized dairy base material **contains sufficient nisin-containing curd to provide about 250 to about 1200 IU nisin/g in the stabilized dairy base material.**

27. The method of any one of Claims 12 to 26, wherein the stabilized dairy base material **contains sufficient nisin-containing curd to provide about 500 to about 900 IU nisin/g in the stabilized dairy base material.**
